# EUROPÄISCHE PATENTSCHRIFT

(11) **EP 2 184 557 B1**
(45) Veröffentlichungstag und Bekanntmachung des Hinweises auf die Patenterteilung: **17.07.2013**
(21) Anmeldenummer: 09171316.4
(22) Anmeldetag: 25.09.2009
(51) Int. Cl.: F24F 7/08, F24F 11/04, F24F 12/00

(54) **Lüftungssystem**
Ventilation system
Système d'aération

(30) Priorität: 07.11.2008 DE 202008014839 U
(43) Veröffentlichungstag der Anmeldung: 12.05.2010
(73) Patentinhaber: TROX GmbH, 47506 Neukirchen-Vluyn (DE)
(72) Erfinder: Joneleit, Ralf, 47445 Moers (DE); Dr. Sefker, Thomas, 47506 Neukirchen-Vluyn (DE)
(74) Vertreter: Stark, Walter

(56) Entgegenhaltungen:
- EP-A1- 2 116 786
- EP-A2- 1 271 066
- EP-A2- 1 632 730
- WO-A1-2006/071117
- WO-A1-2008/102741
- WO-A2-02/097338
- DE-A1- 4 408 096
- DE-U1- 20 209 031

## Beschreibung

Die Erfindung betrifft ein Lüftungssystem mit einem sich zwischen einer rauminnenseitigen Ablufteinlassöffnung einerseits und einer raumaußenseitigen, insbesondere gebäudeaußenseitigen, Fortluftöffnung andererseits erstreckenden Abluftkanal, mit einem sich zwischen einer raumaußenseitigen, insbesondere gebäudeaußenseitigen, Außenluftöffnung einerseits und einer rauminnenseitigen Zuluftauslassöffnung andererseits erstreckenden Zuluftkanal und mit einem von dem Abluftkanal und dem Zuluftkanal durchströmten Wärmetauscher, in dem die Wärme von der in dem Abluftkanal strömenden Abluft an die in dem Zuluftkanal strömenden Zuluft oder umgekehrt abgegeben wird, wobei der Abluftkanal und/oder der Zuluftkanal (jeweils) im Bereich des Wärmetauschers in einen den Wärmetauscher durchlaufenden Teilbereich sowie einen parallel hierzu verlaufenden und den Wärmetauscher umgehenden Bypass aufgeteilt ist(sind).

Derartige Lüftungssysteme werden beispielsweise zur dezentralen Belüftung von Räumen eingesetzt und können abhängig von dem Einbauort unterschiedliche Ausgestaltungen aufweisen. So kann beispielsweise ein solches bekanntes Lüftungssystem unterhalb eines Fensters im Brüstungsbereich einer Gebäudewand eingesetzt werden. Es ist ebenfalls eine Verwendung als Unterflurgerät im Bereich eines Fußbodens vor einem Fenster denkbar, wobei hier die Zuluft über den Boden in den zu belüftenden Raum einströmt. Üblicherweise sind dabei sowohl in dem Abluftkanal als auch in dem Zuluftkanal je eine Luftfördereinrichtung vorgesehen.

Derartige zentrale und/oder dezentral arbeitende Lüftungssysteme sind üblicherweise mit einem Luft-Luftwärmetauscher ausgestattet. Die Wärmerückgewinnungsgrade liegend üblicherweise zwischen 40 und 90%. Da insbesondere in der Sommerzeit ein hoher Wärmerückgewinnungsgrad nicht immer energetisch sinnvoll ist, sind diese Lüftungssysteme mit einem Bypass ausgestattet. Ziel dieses Bypasses ist es, neben der Frostschutzfunktion die Wärmertickgewinnung, wenn diese nicht erwünscht ist, zu umgehen.

Im Stand der Technik ist im Bypass eine Sperreinrichtung vorgesehen, die entweder eine geöffnete Stellung oder eine geschlossene Stellung aufweisen kann. Daher ist häufig ein Nacherhitzen bzw. Nachkühlen der Zuluft des Lüftungssystems erforderlich, was einen zusätzlichen Energieverbrauch zur Folge hat. Aus der EP 2 116 786 A1 ist ein Lüftungssystem bekannt, bei dem ein Kanal in Strömungsrichtung gesehen vor einem Wärmetauscher in den Zuluftkanal mündet, um heiße Luft zur Verminderung eines Erfrierens des Wärmetauschers in den Zuluftstrom zu mischen.

Aufgabe der Erfindung ist es, die vorgenannten Nachteile zu vermeiden und ein Lüftungssystem anzugeben, bei dem das Maß der Wärmerückgewinnung besser beeinflussbar ist.

Diese Aufgabe wird dadurch gelöst, dass in dem Abluft- und/oder in dem Zuluftkanal im dortigen Bypass und/oder in dem zum Bypass parallel verlaufenden und den Wärmetauscher durchlaufenden Teilbereich des Abluft- und/oder des Zuluftkanals eine Einrichtung zur Einstellung, insbesondere Regelung, des Anteils des durch diesen Bypass bzw. diesen Teilbereich strömenden Abluft- bzw. Zuluftstroms vorgesehen ist, die unabhängig von einer eventuellen vollständig geöffneten oder vollständigen geschlossenen Stellung zwischen verschiedenen Durchflusseinstellungen veränderbar ist.

Abhängig von dem Verhältnis der herrschenden Außentemperatur zur gewünschten Raum-Soll-Temperatur und zur herrschenden Raum-Ist-Temperatur können der Anteil des Abluft- bzw. Zuluftstroms, der über den Wärmetauscher strömt, und der Anteil des Abluft- bzw. Zuluftstroms, der über den Teilbereich des betreffenden Abluftkanals bzw. Zuluftkanals strömt, gezielt eingestellt werden. Damit kann bei geeigneten Außenluftbedingungen die gewünschte Zulufttemperatur für den Raum bereitgestellt werden, ohne dass eine Nacherhitzung oder Nachkühlung nötig ist. Insbesondere bei dezentralen Lüftungssystemen kann der Wärmerückgewinnungsgrad so raumweise an die inneren und äußeren Gegebenheiten angepasst werden.

Als Einrichtung kann ein Volumenstromregler, insbesondere ein variabler Volumenstromregler, vorgesehen sein. Es kann sich dabei um einen selbsttätigen Volumenstromregler handeln, der beispielsweise mit einem Stelltrieb verbunden ist. Selbsttätig arbeitende Volumenstromregler weisen üblicherweise eine im Inneren eines Strömungskanals auf einer quer zur Strömungsrichtung angeordneten Welle schwenkbar gelagerte Regelklappe auf. Die Regelklappe ist unter Einwirkung des die Regelklappe anströmenden Volumenstroms gegen eine durch eine Rückstelleinrichtung erzeugte Rückstellkraft aus der Offenstellung in eine Schließstellung verschwenkbar und wird bei sich verringerndem Volumenstrom durch die Rückstellkraft wieder in die Offenstellung zurückverschwenkt. Mittels des Stelltriebs kann z.B. der Sollwert gezielt eingestellt werden.

Damit kann unter Berücksichtigung des derzeit strömenden Abluft- bzw. Zuluftvolumenstroms und der gewünschten Raum-Soll-Temperatur jedes hierzu erforderliche Verhältnis des über den Wärmetauscher strömenden Anteils und des über den Bypass strömenden Anteils eingestellt werden.

Vorzugsweise ist der Volumenstromregler in dem Bypass angeordnet. Ist der Volumenstromregler in dem Bypass des Abluftkanals angeordnet, verlagert sich die Klappe bei Erreichen eines Sollwertes mehr und mehr in die Schließstellung, so dass damit der Anteil des Abluftstroms, der durch den zum Bypass parallel verlaufenden und den Wärmetauscher durchlaufenden Teilbereich des Abluftkanals strömt, erhöht wird.

Bei einem anderen Ausführungsbeispiel kann ein variabler Volumenstromregler in dem zum Bypass parallel verlaufenden und den Wärmetauscher durchlaufenden Teilbereich, insbesondere in Strömungsrichtung des Abluft- bzw. Zuluftstroms gesehen vor dem Wärmetauscher, angeordnet sein und in dem parallelen Bypass kann ein Strömungshindernis, insbesondere ein querschnittreduzierendes Element, wie z. B. eine Drosseleinrichtung, eine Blende oder dergleichen, vorgesehen sein. Hier ist der Volumenstromregler in dem parallel zum Bypass verlaufenden Teilbereich vor dem Wärmetauscher vorgesehen. Wird ein voreingestellter Sollwert erreicht, verlagert sich die Klappe mehr und mehr in ihre Schließstellung, so dass damit ein höherer Anteil über den dortigen Bypass strömt.

Die Aufgabe wird aber auch durch eine Ausführungsform gelöst, bei der in dem Abluft- und/oder in dem Zuluftkanal in der Abzweigung vom dortigen Bypass und dem zum Bypass parallel verlaufenden und den Wärmetauscher durchlaufenden Teilbereich des Abluft- und/oder des Zuluftkanals eine Einrichtung zur Verteilung, insbesondere Regelung, der Anteile des durch diesen Bypass bzw. diesen Teilbereich strömenden Abluft- bzw. Zuluftstroms vorgesehen ist. Bei der Einrichtung kann es sich beispielsweise um eine Klappe handeln.

Vorzugsweise ist die Verteilung der Anteile des durch diesen Bypass bzw. diesen Teilbereich strömenden Abluft- bzw. Zuluftstroms unabhängig von einer eventuell vollständig geöffneten oder vollständig geschlossenen Stellung in verschiedenen Durchflusseinstellungen möglich. Bei einer solchen Ausgestaltung kann die Einrichtung beispielsweise als Regelklappe ausgebildet sein, wobei die Regelklappe außer der vollständig geöffneten oder vollständig geschlossenen Stellung jede andere beliebige Position annehmen kann.

Im Folgenden werden in den Zeichnungen dargestellte Ausführungsbeispiele der Erfindung erläutert. Es zeigen:
- Fig. 1: ein erfindungsgemäßes Lüftungssystem mit einem variablen Volumenstromregler im Bypass,
- Fig. 2: ein erfindungsgemäßes Lüftungssystem mit einem variablen Volumenstromregler in einem den Wärmetauscher durchlaufenden Teilbereich des Abluftkanals vor dem Wärmetauscher,
- Fig. 3: ein erfindungsgemäßes Lüftungssystem mit einer Einrichtung im Bereich der Abzweigung und
- Fig. 4: ein erfindungsgemäßes Lüftungssystem mit einer steuer-/regelbaren Klappe im Bypass.

In allen Figuren werden für gleiche bzw. gleichartige Bauteile übereinstimmende Bezugszeichen verwendet.

In den Figuren sind unterschiedliche Ausgestaltung von Lüftungssystemen dargestellt. Jedes Lüftungssystem besteht aus einem sich zwischen einer raumseitigen Ablufteinlassöffnung 1 und einer raumaußenseitigen Fortluftöffnung 2 erstreckenden Abluftkanal 3.

Ferner weist das Lüftungssystem einen sich zwischen einer raumaußenseitigen Außenluftöffnung 4 und einer rauminnenseitigen Zuluftauslassöffnung 5 erstreckenden Zuluftkanal 6 auf.

Des weiteren weist das Lüftungssystem einen von dem Abluftkanal 3 und von dem Zuluftkanal 6 durchströmten Wärmetauscher 7 auf, in dem die Wärme von der in dem Abluftkanal 3 strömenden Abluft an die in dem Zuluftkanal 6 strömende Zuluft oder umgekehrt abgegeben wird.

Der Abluftkanal 3 ist in den dargestellten Ausführungsbeispielen im Bereich des Wärmetauschers 7 in einen den Wärmetauscher 7 durchlaufenden Teilbereich 3a sowie einen parallel hierzu verlaufenden und den Wärmetauscher 7 umgehenden Bypass 3b aufgeteilt.

Bei allen in den Figuren dargestellten Ausführungsbeispielen sind in dem Zuluftkanal 6 in Strömungsrichtung (Pfeil 8) gesehen vor dem Wärmetauscher 7 eine Rückschlagklappe 9, eine motorisch betätigbare Absperrklappe 10, ein Zuluftfilter 11 und ein Volumenstrombegrenzer 12 vorgesehen.

Bei dem Volumenstrombegrenzer 12 kann es sich um einen Volumenstromregler handeln, bei dem manuell ein Sollwert eingestellt wird. Dieser festeingestellte Sollwert bleibt dann unverändert, außer wenn er manuell wieder verstellt wird. Zusätzlich ist in dem Zuluftkanal 6 in Strömungsrichtung (Pfeil 8) gesehen hinter dem Wärmetauscher 7 ein Zuluftventilator 13, ein Schalldämpfer 14 und ein weiterer Wärmetauscher 15 vorgesehen.

In dem Abluftkanal 3 ist vor einer Abzweigung 16 vom Bypass 3b und dem zum Bypass 3b parallel verlaufenden und den Wärmetauscher 7 durchlaufenden Teilbereich 3a des Abluftkanals 3 ein Abluft-/Umluftfilter 17 vorgesehen. Hinter der Zusammenführung 18 des Bypasses 3b und des zum Bypass 3b parallel verlaufenden und den Wärmetauscher 7 durchlaufenden Teilbereiches 3a befindet sich in dem Abluftkanal 3 ein Schalldämpfer 19, ein Abluftventilator 20, eine motorisch betätigbare Absperrklappe 21 und eine Rückschlagklappe 22.

Damit das Lüftungssystem auch einen reinen Umluftbetrieb erlaubt, sind der Zuluftkanal 6 und der Abluftkanal 3 über eine Umluftleitung 23, die eine selbsttätige Umluftklappe 24 aufweist, verbunden. Die Umluftleitung 23 wird aus dem Abluftkanal 3 in Strömungsrichtung (Pfeil 25) gesehen hinter dem Abluft-/Umluftfilter 17 abgezweigt und mündet in Strömungsrichtung (Pfeil 8) gesehen hinter dem Wärmetauscher 7 in den Zuluftkanal 6.

Unterschiede zwischen den Ausführungsbeispielen bestehen hinsichtlich der technischen Ausgestaltung der Aufteilung des durch den Bypass 3b und durch den zum Bypass 3b parallel verlaufenden und den Wärmetauscher 7 durchlaufenden Teilbereich 3a des Abluftkanals 3 strömenden Abluftstrom.

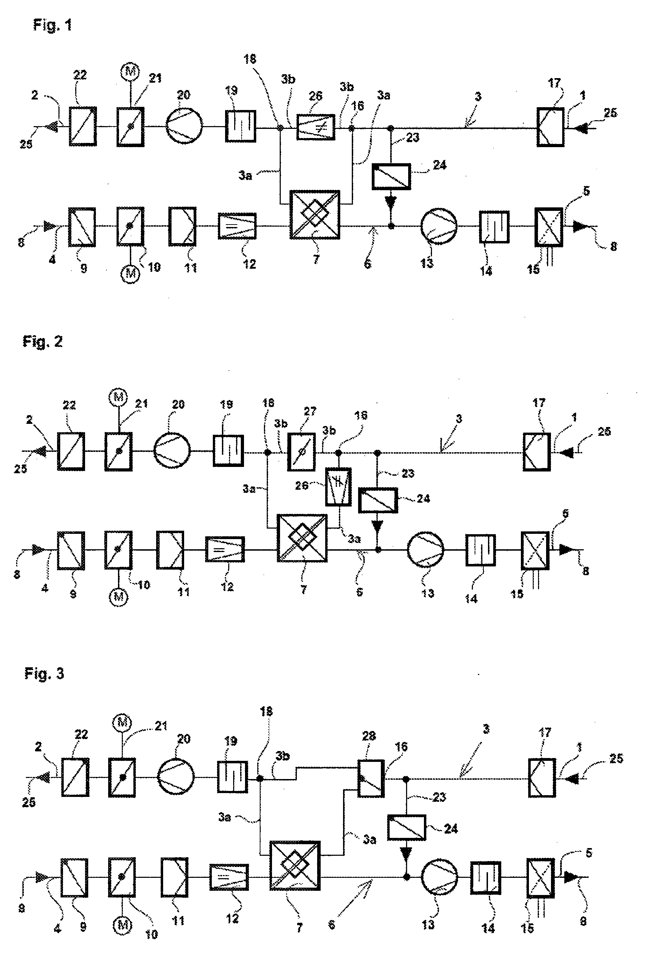

Bei den Ausführungsbeispielen nach den Fig. 1, 2 und 4 ist in dem Abluftkanal 3 im dortigen Bypass 3b und/oder in dem zum Bypass 3b parallel verlaufenden und den Wärmetauscher 7 durchlaufenden Teilbereich 3a des Abluftkanals 3 eine Einrichtung 26 zur Einstellung, insbesondere Regelung des Anteils des durch diesen Bypass 3b bzw. diesen Teilbereich 3a strömenden Abluftstroms vorgesehen. Die Einrichtung 26 kann unabhängig von einer eventuellen vollständig geöffneten oder vollständig geschlossenen Stellung in jede und damit in verschiedene Durchflusseinstellungen verändert werden, so dass damit jedes Verhältnis einstellbar ist.

Bei dem Ausführungsbeispiel nach Fig. 1 ist die Einrichtung 26 als variabler Volumenstromregler ausgebildet und ist im Bypass 3b angeordnet. Dem Volumenstromregler kann beispielsweise ein Stelltrieb, wie z.B. ein Motor, zugeordnet sein, der eine Einstellung und damit eine Veränderung des Sollwertes ermöglicht.

Fig. 2 zeigt ein Ausführungsbeispiel, bei der die Einrichtung 26 ebenfalls als variabler Volumenstromregler ausgebildet ist. Jedoch ist die Einrichtung 26 in dem den Wärmetauscher 7 durchlaufenden Teilbereich 3a des Abluftkanals 3 angeordnet. In dem zugehörigen Bypass 3b ist ein Strömungshindernis 27, das in dem dargestellten Ausführungsbeispiel als Drosseleinrichtung ausgebildet ist, vorgesehen.

In Fig. 3 ist eine weitere Alternative eines erfindungsgemäßen Lüftungssystems dargestellt. Bei diesem Ausführungsbeispiel ist in dem Abluftkanal 3 in der Abzweigung 16 des dortigen Bypasses 3b und des parallel zum Bypass 3b verlaufenden und den Wärmetauscher 7 durchlaufenden Teilbereiches 3a eine Einrichtung 28 vorgesehen, mittels der der Anteil des durch den Bypass 3b und durch den Teilbereich 3a strömenden Abluftstroms beliebig aufteilbar ist. Bei dieser Einrichtung 28 kann es sich um eine regelbare Klappe handeln. Jede beliebige Position der Klappe und damit jedes Verhältnis zwischen dem durch den Bypass 3b und dem durch den Teilbereich 3a strömenden Abluftstrom ist einstellbar.

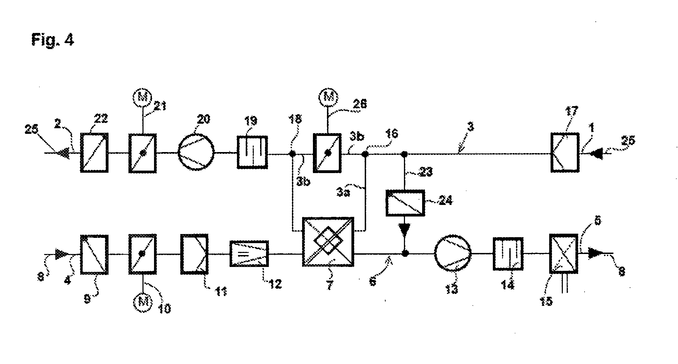

In Fig. 4 ist ein Ausführungsbeispiel dargestellt, bei dem in dem Bypass 3b des Abluftluftkanals 3 eine regelbare Klappe als Einrichtung 26 vorgesehen ist. Auch hier ist jede beliebige Position der Klappe und damit jedes Verhältnis zwischen dem durch den Bypass 3b und dem durch den Teilbereich 3a strömenden Abluftstrom einstellbar.

Selbstverständlich ist es auch möglich, dass der Zuluftkanal 6 im Bereich des Wärmetauschers 7 in einen den Wärmetauscher 7 durchlaufenden Teilbereich sowie einen parallel hierzu verlaufenden und den Wärmetauscher umgehenden Bypass aufgeteilt ist, so dass damit eine Aufteilung des durch den Bypass und durch den zum Bypass parallel verlaufenden und den Wärmetauscher 7 durchlaufenden Teilbereich des Zuluftkanals strömenden Zuluftstroms möglich ist.

Bei den in den Fig. 1 bis 4 dargestellten Ausführungsbeispielen kann in dem Bypass 3b ein zusätzlicher Wärmetauscher mit einem zum Wärmetauscher 7 unterschiedlichen Wärmerückgewinnungsgrad vorgesehen sein.

## Patentansprüche

1. Lüftungssystem mit einem sich zwischen einer rauminnenseitigen Ablufteinlassöffnung (1) einerseits und einer raumaußenseitigen, insbesondere gebäudeaußenseitigen, Fortluftöffnung (2) andererseits erstreckenden Abluftkanal (3), mit einem sich zwischen einer raumaußenseitigen, insbesondere gebäudeaußenseitigen, Außenluftöffnung (4) einerseits und einer rauminnenseitigen Zuluftauslassöffnung (5) andererseits erstreckenden Zuluftkanal (6) und mit einem von dem Abluftkanal (3) und dem Zuluftkanal (6) durchströmten Wärmetauscher (7), in dem die Wärme von der in dem Abluftkanal (3) strömenden Abluft an die in dem Zuluftkanal (6) strömenden Zuluft oder umgekehrt abgegeben wird, wobei der Abluftkanal (3) und/oder der Zuluftkanal (6) (jeweils) im Bereich des Wärmetauschers (7) in einen den Wärmetauscher (7) durchlaufenden Teilbereich (3a bzw. 6a) sowie einen parallel hierzu verlaufenden und den Wärmetauscher (7) umgehenden Bypass (3b bzw. 6b) aufgeteilt ist(sind), **dadurch gekennzeichnet, dass** in dem Abluft- und/oder in dem Zuluftkanal (3 oder 6) im dortigen Bypass (3b bzw. 6b) und/oder in dem zum Bypass (3b bzw. 6b) parallel verlaufenden und den Wärmetauscher (7) durchlaufenden Teilbereich (3a bzw. 6a) des Abluft- und/oder des Zuluftkanals (3 oder 6) eine Einrichtung (26) zur Einstellung, insbesondere Regelung, des Anteils des durch diesen Bypass (3b bzw. 6b) bzw. diesen Teilbereich (3a bzw. 6a) strömenden Abluft- bzw. Zuluftstroms vorgesehen ist, die unabhängig von einer eventuellen vollständig geöffneten oder vollständigen geschlossenen Stellung zwischen verschiedenen DurchflusseinStellungen veränderbar ist.

2. Lüftungssystem nach dem vorhergehenden Anspruch, **dadurch gekennzeichnet, dass** als Einrichtung (26) ein Volumenstromregler, insbesondere ein selbsttätiger Volumenstromregler, vorgesehen ist.

3. Lüftungssystem nach Anspruch 2, **dadurch gekennzeichnet, dass** der Volumenstromregler in dem Bypass (3b bzw. 6b) angeordnet ist.

4. Lüftungssystem nach Anspruch 2, **dadurch gekennzeichnet, dass** der Volumenstromregler in dem zum Bypass (3b bzw. 6b) parallel verlaufenden und den Wärmetauscher (7) durchlaufenden Teilbereich (3a bzw. 6a), insbesondere in Strömungsrichtung (8 bzw. 25) des Abluft- bzw. Zuluftstroms gesehen vor dem Wärmetauscher (7), angeordnet ist und in dem parallelen Bypass (3b bzw. 6b) ein Strömungshindernis (27), insbesondere ein querschnittreduzierendes Element, wie z. B. eine Blende, eine Drosseleinrichtung oder dergleichen, vorgesehen ist.

5. Lüftungssystem mit einem sich zwischen einer rauminnenseitigen Ablufteinlassöffnung (1) einerseits und einer raumaußenseitigen, insbesondere gebäudeaußenseitigen, Fortluftöffnung (2) andererseits erstreckenden Abluftkanal (3), mit einem sich zwischen einer raumaußens.eitigen, insbesondere gebäudeaußenseitigen, Außenluftöffnung (4) einerseits und einer rauminnenseitigen Zuluftauslassöffnung (5) andererseits erstreckenden Zuluftkanal (6) und mit einem von dem Abluftkanal (3) und dem Zuluftkanal (6) durchströmten Wärmetauscher (7), in dem die Wärme von der in dem Abluftkanal (3) strömenden Abluft an die in dem Zuluftkanal (6) strömenden Zuluft oder umgekehrt abgegeben wird, wobei der Abluftkanal (3) und/oder der Zuluftkanal (6) (jeweils) im Bereich des Wärmetauschers (7) in einen den Wärmetauscher (7) durchlaufenden Teilbereich (3a bzw. 6a) sowie einen parallel hierzu verlaufenden und den Wärmetauscher (7) umgehenden Bypass (3b bzw. 6b) aufgeteilt ist(sind), **dadurch gekennzeichnet, dass** in dem Abluft- und/oder in dem Zuluftkanal (3 oder 6) in der Abzweigung (16) vom dortigen Bypass (3b bzw. 6b) und dem zum Bypass (3b bzw. 6b) parallel verlaufenden und den Wärmetauscher (7) durchlaufenden Teilbereich (3a bzw. 6a) des Abluft- und/oder des Zuluftkanals (3 oder 6) eine Einrichtung (28) zur Verteilung, insbesondere Regelung, der Anteile des durch diesen Bypass (3b bzw. 6b) bzw. diesen Teilbereich (3a bzw. 6a) strömenden Abluft- bzw. Zuluftstroms vorgesehen ist.

6. Lüftungssystem nach Anspruch 5, **dadurch gekennzeichnet, dass** die Verteilung unabhängig von einer eventuell vollständig geöffneten oder vollständig geschlossenen Stellung in verschiedenen Durchflusseinstellungen möglich ist.

## Claims

1. A ventilation system having an exhaust air duct (3) extending between an Inner side exhaust air opening (1) inside the room on the one hand and an outer side exhaust air opening (2) outside the room, In particular outside the building, on the other hand, having a supply air duct (6) extending between an outside air opening (4) outside the room, In particular outside the building, on the one hand and a supply air outlet opening (5) outside the room on the other hand and having a heat exchanger (7) through which the exhaust air duct (3) and the supply air duct (6) flows and In which the heat from the exhaust air flowing In the exhaust air duct (3) Is transferred to the supply air flowing In the supply air duct (6) or vice versa, with the exhaust air duct (3) and/or the supply air duct (6) (each) being divided In the region of the heat exchanger (7) Into a partial region (3a and 6a) passing through the heat exchanger (7) and a bypass (3b and 6b) running parallel with said partial region and bypassing the heat exchanger (7), wherein there Is provided in the exhaust air duct and/or In the supply air duct (3 or 6) In the bypass (3b or 6b) there located and/or In the partial region (3a or 6a) of the exhaust air duct and/or supply air duct (3 or 6) running parallel with the bypass (3b or 6b) and passing through the heat exchanger (7), a device (26) for setting, In particular for regulating, the proportion of the exhaust air flow or supply air flow flowing through this bypass (3b or 6b) or this partial region (3a or 6a) and which Is variable independently of a possibly fully opened or fully closed position between different flow settings.

2. The ventilation system of the preceding claim wherein a volumetric flow controller, In particular an automatic volumetric flow controller, is provided as device (26).

3. The ventilation system of claim 2 wherein the volumetric flow controller is disposed in the bypass (3b or 6b).

4. The ventilation system of claim 2 wherein the volumetric flow controller is arranged In the partial region (3a or 6a) running parallel to the bypass (3b or 6b) and passing through the heat exchanger (7), In particular upstream of the heat exchanger (7) when looking in the direction of flow (8 or 25) of the exhaust air flow or supply air flow, and a flow obstruction (27), in particular a cross-section-reducing element such as for example an orifice, a throttle device or the like, is provided In the parallel bypass (3b or 6b).

5. A ventilation system having an exhaust air duct (3) extending between an Inner side exhaust air opening (1) inside the room on the one hand and an outer side exhaust air opening (2) outside the room, in particular outside the building, on the other hand, having a supply air duct (6) extending between an outside air opening (4) outside the room, In particular outside the building, on the one hand and a supply air outlet opening (5) outside the room on the other hand and having a heat exchanger (7) through which the exhaust air duct (3) and the supply air duct (6) flows and in which the heat from the exhaust air flowing In the exhaust air duct (3) is transferred to the supply air flowing in the supply air duct (6) or vice versa, with the exhaust air duct (3) and/or the supply air duct (6) (each) being divided In the region of the heat exchanger (7) into a partial region (3a and 6a) passing through the heat exchanger (7) and a bypass (3b and 6b) running parallel with said partial region and bypassing the heat exchanger (7), wherein In the exhaust air duct and/or In the supply air duct (3 or 6) there is provided in the branch (16) from the bypass (3b or 6b) there located and the partial region (3a or 6a) of the exhaust air duct and/or supply air duct (3 or 6) running parallel to the bypass (3b or 6b) and passing through the heat exchanger (7), a device (28) for the distribution, In particular regulation, of the proportions of the exhaust air flow or supply air flow flowing through this bypass (3b or 6b) or this partial region (3a or 6a).

6. The ventilation system of claim 5 wherein the distribution Is possible In different flow settings independently of a possibly full opened or fully closed position.

## Revendications

1. Système de ventilation, avec un canal d'air sortant (3) s'étendant entre d'une part une ouverture d'admission d'air sortant (1) du côté intérieur d'un local et d'autre part une ouverture d'air rejeté (2) du côté extérieur d'un local, en particulier du côté extérieur d'un bâtiment, avec un canal d'air entrant (6) s'étendant entre d'une part une ouverture d'air extérieur (4) du côté extérieur du local, en particulier du côté extérieur du bâtiment, et d'autre part une ouverture de sortie d'air entrant (5) du côté intérieur du local, et avec un échangeur de chaleur (7) traversé par le canal d'air sortant (3) et le canal d'air entrant (6) et dans lequel la chaleur de l'air sortant s'écoulant dans le canal d'air sortant (3) est délivrée à l'air entrant s'écoulant dans le canal d'air entrant (6), ou réciproquement, sachant que le canal d'air sortant (3) et/ou le canal d'air entrant (6) sont (respectivement) subdivisés en une région partielle (3a ou 6a) traversant l'échangeur de chaleur (7) ainsi qu'une dérivation (3b ou 6b) s'étendant parallèlement à ladite région partielle et contournant l'échangeur de chaleur (7), **caractérisé en ce qu'**il est prévu dans le canal d'air sortant et/ou dans le canal d'air entrant (3 ou 6), dans la dérivation (3b ou 6b) de ce canal et/ou dans la région partielle (3a ou 6a) du canal d'air sortant et/ou du canal d'air entrant (3 ou 6) s'étendant parallèlement la dérivation (3b ou 6b) et traversant l'échangeur de chaleur (7), un dispositif (26) de réglage, notamment de régulation, de la part du flux d'air sortant ou du flux d'air entrant qui s'écoule par cette dérivation (3b ou 6b) ou respectivement par cette région partielle (3a ou 6a), dispositif qui peut être modifié entre différents réglages d'écoulement indépendamment d'une position éventuelle totalement ouverte ou totalement formée.

2. Système de ventilation selon la revendication précédente, **caractérisé en ce qu'**un régulateur de débit volumique, en particulier un régulateur de débit volumique automatique, est prévu comme dispositif (26).

3. Système de ventilation selon la revendication 2, **caractérisé en ce que** le régulateur de débit volumique est disposé dans la dérivation (3b ou 6b).

4. Système de ventilation selon la revendication 2, **caractérisé en ce que** le régulateur de débit volumique est disposé dans la région partielle (3a ou 6a) s'étendant parallèlement à la dérivation (3b ou 6b) et traversant l'échangeur de chaleur (7), notamment avant l'échangeur de chaleur (7) considéré dans la direction d'écoulement (8 ou 25) du flux d'air sortant ou du flux d'air entrant, et un obstacle à l'écoulement (27) est prévu dans la dérivation parallèle (3b ou 6b), en particulier un élément réduisant la section comme par exemple un diaphragme, un dispositif d'étranglement ou analogues.

5. Système de ventilation, avec un canal d'air sortant (3) s'étendant entre d'une part une ouverture d'admission d'air sortant (1) du côté intérieur d'un local et d'autre part une ouverture d'air rejeté (2) du côté extérieur d'un local, en particulier du côté extérieur d'un bâtiment, avec un canal d'air entrant (6) s'étendant entre d'une part une ouverture d'air extérieur (4) du côté extérieur du local, en particulier du côté extérieur du bâtiment, et d'autre part une ouverture de sortie d'air entrant (5) du côté intérieur du local, et avec un échangeur de chaleur (7) traversé par le canal d'air sortant (3) et le canal d'air entrant (6) et dans lequel la chaleur de l'air sortant s'écoulant dans le canal d'air sortant (3) est délivrée à l'air entrant s'écoulant dans le canal d'air entrant (6), ou réciproquement, sachant que le canal d'air sortant (3) et/ou le canal d'air entrant (6) sont (respectivement) subdivisés en une région partielle (3a ou 6a) traversant l'échangeur de chaleur (7) ainsi qu'une dérivation (3b ou 6b) s'étendant parallèlement à ladite région partielle et contournant l'échangeur de chaleur (7), **caractérisé en ce qu'**il est prévu dans le canal d'air sortant et/ou dans le canal d'air entrant (3 ou 6), dans la bifurcation (1) entre la dérivation (3b ou 6b) de ce canal et la région partielle (3a ou 6a) du canal d'air sortant et/ou du canal d'air entrant (3 ou 6) s'étendant parallèlement à la dérivation (3b ou 6b) et traversant l'échangeur de chaleur (7), un dispositif (28) de répartition, notamment de régulation, des parts du flux d'air sortant ou du flux d'air entrant qui s'écoulent respectivement par cette dérivation (3b ou 6b) ou par cette région partielle (3a ou 6a).

6. Système de ventilation selon la revendication 5, **caractérisé en ce que** la répartition est possible dans différents réglages d'écoulement indépendamment d'une position éventuellement totalement ouverte ou totalement fermée.
